# EUROPÄISCHE PATENTSCHRIFT

(11) **EP 4 188 104 B1**
(45) Veröffentlichungstag und Bekanntmachung des Hinweises auf die Patenterteilung: **24.09.2025**
(21) Anmeldenummer: 22702730.7
(22) Anmeldetag: 31.01.2022
(51) Int. Cl.: A23G 1/28, A23G 3/02, A23G 7/00, A23G 3/34, A23G 1/00

(54) **VERFAHREN UND VORRICHTUNG ZUR ENTFORMUNG EINES SÜSSWARENARTIKELS AUS EINER GIESSFORM**
METHOD AND DEVICE FOR UNMOULDING A CONFECTIONERY ARTICLE FROM A CASTING MOULD
PROCEDE ET DISPOSITIF POUR DEMOULAGE D'UNE DENREE DE CONFISERIE D'UN MOULE DE FONDAGE

(30) Priorität: 02.02.2021 DE 102021102326
(43) Veröffentlichungstag der Anmeldung: 07.06.2023
(73) Patentinhaber: Winkler und Dünnebier Süsswarenmaschinen GmbH, 56579 Rengsdorf (DE)
(72) Erfinder: RUNKEL, Rainer, 56579 Rengsdorf (DE); FREUND, Christian, 56581 Kurtscheid (DE); BRACK, Holger, 55452 Rümmelsheim (DE); DOMMASCH, Sebastian, 56642 Kruft (DE); TICHOLIS, Artur, 56579 Rengsdorf (DE)
(74) Vertreter: Lippert Stachow Patentanwälte Rechtsanwälte
(86) Internationale Anmeldenummer: PCT/EP2022/052211
(87) Internationale Veröffentlichungsnummer: WO 2022/167367

(56) Entgegenhaltungen:
- EP-A1- 1 064 851
- WO-A1-2017/001234
- DE-A1- 1 607 804
- DE-A1- 2 633 538
- DE-A1- 2 724 625
- DE-A1- 3 411 861
- DE-C- 954 026
- US-A- 6 165 531

## Beschreibung

Die Erfindung betrifft ein Verfahren und eine Vorrichtung zur Entformung wenigstens eines Süßwarenartikels aus einer Kavität einer Gießform unter Verwendung einer Greifanordnung mit wenigstens einem Saugelement. Vorzugsweise umfasst die Vorrichtung wenigstens eine Gießform. Insbesondere ist der Süßwarenartikel in der Kavität aus einer kontraktionsarmen Masse und klebrig.

Ein gattungsgemäßes Verfahren und eine Vorrichtung zur Entformung wenigstens eines Süßwarenartikels sind aus der US 6,165,531 A bekannt. Dieser Stand der Technik betrifft die Herstellung eines Süßwarenartikels auf Fettbasis, beispielsweise Schokolade. Hierfür wird die Schokolade in eine Kavität einer Gießform gegossen und zwar in eine Gießform, deren Material eine niedrige Oberflächenenergie aufweisen soll, um eine einfachere Entformung des Süßwarenartikels zu ermöglichen. Als Beispiele für das Material der Gießform werden Silikon oder Polytetrafluorethylen vorgeschlagen. Die einfachere Entformung soll die Kompatibilität von Gieß- und "Pick-and-Place"-Technologie zur Entnahme des geformten Produkts aus den Kavitäten verbessern. Als Pick-and-Place-Geräte bezeichnet dieser Stand der Technik Robotersysteme, die geformte Produkte mittels Saugung anheben und auf eine Fläche bewegen, z. B. ein Förderband, wo sie durch Beendigung der Saugung zur weiteren Verarbeitung abgelegt werden.

Das bekannte Verfahren der US 6,165,531 A profitiert von dem in diesem Fachgebiet allgemein bekannten Effekt einer Volumenabnahme von Schokolade bei deren Erstarrung. Der Effekt beruht auf der Eigenschaft von Kakaobutter, in Folge ihrer Kristallisation zu kontrahieren, wenn die Kakaobutter aus dem geschmolzenen Zustand erstarrt. Die Kontraktion der Kakaobutter führt zu einer Volumenabnahme des ganzen mit ihr hergestellten Süßwarenartikels. Die Volumenabnahme begünstigt die Entformung des Süßwarenartikels aus der Kavität der Gießform. Es ist daher eine allgemein bekannte Verfahrensweise, Einfluss auf den Grad der Kontraktion des Süßwarenartikels zu nehmen, um die Entformung zu optimieren. Bei einem Süßwarenartikel aus Schokolade geschieht die Beeinflussung der Kontraktion beispielsweise durch eine entsprechend gesteuerte Temperierung der zu gießenden Schokolade sowie eine anschließende günstig gesteuerte Abkühlung des Süßwarenartikels. Bei einem gefüllten Süßwarenartikel kann beispielsweise eine Untertemperierung zu einer stärkeren Kontraktion und zu einer besseren Entformung führen (4. Auflage 2009, Beckett, Industrial Chocolate Manufacture and use).

Eine weitere Vorrichtung zur Entformung von Süßwarenartikeln aus einer Kavität einer Gießform ist in der DE 27 24 625 A1 vorgeschlagen worden, welche Süßwarenartikel aus Schokolade betrifft.

Die DE 26 33 538 A1 beschreibt eine zur Überführung von Gegenständen, insbesondere Schokoladentafeln - oder riegeln, durch eine Förderbewegung auf einer Kreisbahn um 180° zwischen den Formen einer Herstellungsmaschine und dem Tisch einer Verpackungsmaschine oder einer Gruppierungsplatte bestimmte Vorrichtung, die an die Förderbewegung ausführenden, rohrförmigen Haltern befestigte Saugköpfe aufweist, die mit einer Saugleitung verbunden sind, wobei auf einer ortsfesten hohlen Achse rohrförmige, die Halter für die Saugköpfe tragende Ausleger drehbar und diametral gegenüber gelagert sind, die mit einer Geschwindigkeit antreibbar sind, die zu derjenigen der Herstellungsmaschine im Bereich der Ansaugung synchron ist und bei deren Umlauf eine erste Kurvensteuerung und eine zweite Kurvensteuerung wirksam wird, von denen die erste zur Erleichterung des Ansaugens der Gegenstände den Saugkopfhaltern eine Winkelkorrektur erteilt, während die zweite zur Veränderung des Abstandes der Gegenstände die Ausleger während ihres Umlaufs parallel zu der ortsfesten Achse bewegt.

Die DE 16 07 804 A1 betrifft ein Verfahren und eine Vorrichtung, um Schokoladenstücke o. dgl. in einer Verkaufspackung in anzuordnen, wobei Schokoladenmasse o. dgl. in noch flüssigem Zustand in Formen gefüllt wird, die den in der Verkaufspackung vorgesehenen Abstand haben, anschließend auf die Formen eine Platte gelegt wird, die mit den einzelnen Formen zugeordneten, in die Schokoladenmasse o. dgl. eindringen Vorsprüngen versehen ist, worauf die die Formen enthaltende Einrichtung gemeinsam mit der Platte so gedreht wird, dass die Platte zuunterst liegt, darauf die die Formen enthaltende Einrichtung nach Aufhebung der Haftverbindung zwischen den erstarrten Schokoladenstücken o. dgl. und der Oberfläche der Formen durch Rütteln oder Vibrieren nach oben abgehoben und schließlich die mit den Schokoladenstücken o. dgl. besetzte Platte verpackt wird.

Es gibt andere Süßwarenartikel aus Massen, welche keiner derart großen Volumenabnahme durch Kontraktion unterliegen. Dazu zählen Zucker und/oder Stärke enthaltende weiche Süßwarenartikel. Sie weisen in der Regel außerdem eine gewisse Klebrigkeit auf.

Aufgrund von Haftkräften an der Kontaktfläche der Kavität bleibt die äußere Grenzschicht des Süßwarenartikels daran kleben. Selbst dann, wenn die Kontaktfläche der Kavität aus einem Material besteht, das eine niedrige Oberflächenenergie aufweist, bleiben gewisse Haftkräfte erhalten, welche die zur Entformung nötigen Kräfte erhöhen und die Entformung erschweren. Der Erfindung liegt die Aufgabe zugrunde, ein Verfahren und eine Vorrichtung zur Entformung eines kontraktionsarmen klebrigen Süßwarenartikels aus einer Gießform vorzuschlagen, so dass der Süßwarenartikel trotz möglicher Haftkräfte, die zwischen seiner Grenzschicht und der Kontaktfläche der Kavität der Gießform wirken, unter Verwendung einer Greifanordnung mit einem Saugelement herausnehmbar ist.

Erfindungsgemäß wird die Aufgabe durch ein Verfahren nach Anspruch 1 sowie durch eine Vorrichtung nach Anspruch 5 gelöst.

Vorteilhafte Ausführungen ergeben sich jeweils aus den abhängigen Ansprüchen.

Das Saugelement der Greifanordnung wird zweckmäßig im Wesentlichen orthogonal zur Ebene der Gießform an den Süßwarenartikel angesetzt und mittels Unterdrucks der Boden des Süßwarenartikels gegen das Saugelement angesaugt.

Der Erfinder hat herausgefunden, dass bei einem senkrechten Herausbewegen eines solchen Süßwarenartikels, dessen Grenzschicht an der Kontaktfläche der Kavität festklebt, es vorkommen kann, dass er umfänglich und vor allem am oberen Rand der Kontaktfläche kleben bleibt, wenn das Saugelement den Süßwarenartikel aus der Kavität zieht, während im unteren Bereich, d. h. am Grund der Kavität, eine Ablösung der Grenzschicht des Süßwarenartikels beginnt. Wenn das geschieht, bildet sich am Grund der Kavität ein Hohlraum, jedoch kann nicht sofort ein Druckausgleich stattfinden. Dieser Effekt ist stärker ausgeprägt bei weicheren Süßwaren, die sich beim Herausbewegen aus der Kavität verformen und sich leicht so von dem Saugelement ansaugen lassen, dass sich die angesaugte Fläche etwas in das Saugelement hinein wölbt. In dem Hohlraum bildet sich deswegen ein Unterdruck, welcher die Kräfte für ein fortschreitendes Herausbewegen des Süßwarenartikels aus der Kavität erhöht und die Entformung behindert.

Andererseits kann es vorkommen, dass während des Herausbewegens im Bereich des oberen Randes der Kontaktfläche der Kavität eine Verjüngung des Süßwarenartikels stattfindet und die Ablösung des Süßwarenartikels dort oben beginnt und nicht am Grund der Kavität. Unabhängig davon, an welcher Stelle die Ablösung des Süßwarenartikels beginnt, in jedem Fall werden durch die Haftkräfte des Süßwarenartikels an der Kontaktfläche der Kavität und durch die Bildung eines Hohlraums die Kräfte erhöht, die zur Entformung notwendig sind. Die Geschwindigkeit der Bewegung des Saugelements weg von der Kavität ist von Bedeutung. Ein zu schnelles weg Bewegen kann dazu führen, dass der Süßwarenartikel in der Kavität haften bleibt und nicht entformt werden kann.

Um eine zuverlässige Ablösung zu begünstigen und einer Beschädigung des Süßwarenartikels entgegenzuwirken, ist es zweckmäßig, wenn die Bewegung des Herausnehmens des Süßwarenartikels in einer geeigneten und angepassten Geschwindigkeit durchgeführt wird. Überraschend fand der Erfinder heraus, dass dies kombiniert mit einer zusätzlichen Ablösungsbewegung es ermöglicht, in einer Kavität klebende Süßwarenartikel, ohne sie zu beschädigen, zuverlässig aus der Kavität herausnehmen zu können.

Erfindungsgemäß ist vorgesehen, dass für die Ablösungsbewegung einerseits das Saugelement den Boden des Süßwarenartikels ansaugt und festhält und andererseits eine Relativbewegung zwischen dem Saugelement und der Gießform erzeugt wird, so dass mittels der Relativbewegung die Haftkraft der äußeren Grenzschicht des Süßwarenartikels zumindest partiell an der Kontaktfläche der Kavität verringert wird.

Ein weiterer Nutzen ergibt sich, wenn die Ablösungsbewegung als eine oszillierende Ablösungsbewegung oder eine umlaufende Ablösungsbewegung vorgesehen ist, und dass die Ablösungsbewegung von der Gießform und/oder dem Saugelement ausgeführt wird. Die umlaufende Ablösungsbewegung kann beispielsweise auf einer kreisrunden oder elliptischen Bewegungsbahn erfolgen.

Einfacherweise wird die Ablösungsbewegung in der Ebene der Gießform ausgeführt oder in einer dazu parallelen Ebene.

Gemäß einer Ausführung wird zwecks Erzeugung einer Ablösungsbewegung die Gießform in eine Rüttelbewegung/Vibration versetzt und zwar bevor oder nachdem das Saugelement den Boden des Süßwarenartikels angesogen hat. Die Begriffe Vibration und Rütteln, Rüttelung oder Rüttelbewegung sind im Sinne der Erfindung gleichbedeutend. Eine solche Rüttelbewegung/Vibration wird vorzugsweise so in die Gießform übertragen, dass sie sich in der Ebene der Gießform bewegt. Durch das Herausbewegen des Süßwarenartikels aus der Kavität und durch die Relativbewegung kommt es vor allem im oberen Bereich der Kavität zu einer Wechselwirkung zwischen der Kontaktfläche der Kavität und der äußeren Grenzschicht des Süßwarenartikels. Dabei treten Normalkräfte auf, die zur Abschälung des Süßwarenartikels von der Kontaktfläche führen, wodurch die Entformung des Süßwarenartikels begünstigt wird. Die Normalkraft ist eine Resultierende einer über den gesamten Querschnitt der Kavität verteilten Flächenkraft. Seine Anhaftung an der Kontaktfläche der Kavität kann zumindest teilweise gelöst werden. Die Ablösung gelingt in einem solchen Maß, dass die verbleibende Haftkraft zwischen Süßwarenartikel und Kavität derart reduziert wird, dass die Saugkraft des Saugelements an dem Süßwarenartikel ausreichend stark ist, damit das Saugelement den Süßwarenartikel aus der Kavität herausziehen kann. Die eingeleiteten Kräfte verformen den Süßwarenartikel derart, dass die Haftkraft an der Kontaktfläche der Kavität sich bestenfalls ganz auflöst oder zumindest verringert. Je mehr sich der Süßwarenartikel von der Kontaktfläche der Kavität ablöst, desto leichter fällt seine Entformung.

Diese Art der Ablösungsbewegung lässt sich beispielsweise mit einem Vibrationserzeuger in die Gießform übertragen.

Vibrationserzeuger können je nach Bauart eine Vibration oder Rüttelung in unterschiedlicher Qualität erzeugen, insbesondere in unterschiedlichen Bewegungsbahnen. Als Vibrationserzeuger bekannt sind fluidisch antreibbare Kolbenvibratoren, die eine Vibration auf einer geradlinigen Bewegungsbahn erzeugen oder fluidisch antreibbare rotierende Turbinen- oder Motorvibratoren, deren rotierendes Bauteil eine Unwucht trägt.

Die Trägheit der Unwuchtmasse überträgt eine Vibration auf das Turbinen- oder Motorgehäuse. Der Vibrationserzeuger kann so verbaut sein, dass er direkt auf die Gießform einwirkt oder indirekt, indem er seine Vibration in ein Trägerelement überträgt, das seinerseits die Gießform trägt und diese in Bewegung versetzt.

Alternativ kann der Vibrationserzeuger auch elektrisch antreibbar sein, als elektrischer Linearantrieb oder als elektrischer Unwuchtmotor.

Die Ablösungsbewegung kann ausschließlich oder zusätzlich mit einer Bewegungskomponente in einer Richtung orthogonal zur Ebene der Gießform ausgeführt werden. Ein Vibrationserzeuger lässt sich zu dem Zweck in entsprechender Ausrichtung montieren, um eine Ablösungsbewegung in horizontaler Ebene auszuführen, d.h. parallel zur Ebene der Gießform, oder in einer vertikalen Ebene oder in jeder geeigneten sonstigen Winkellage relativ zur Ebene der Gießform.

Des Weiteren kann die Ablösungsbewegung mit einem Transportsystems gemäß DE 10 2019 101 290 B3 generiert werden. Dieses Patent vermittelt ein Transportsystem, das eine Gießform durch eine Süßwarenmaschine transportieren und darüber hinaus eine Hilfsbewegung erzeugen kann, welche im Herstellprozess benötigt wird. Zu den möglichen Hilfsbewegungen zählt eine Rüttelbewegung, mit der beispielsweise in die Gießform hineingegossene Süßwarenmasse gleichmäßig verteilt werden kann. Für die vorliegende Erfindung wird die Erzeugung der Rüttelbewegung gemäß DE 10 2019 101 290 B3, welche mit deren Transportsystem möglich ist, per Verweis eingebunden. Die Hilfsbewegung wird für den Zweck der vorliegenden Erfindung so optimiert und angepasst, dass eine effektive Ablösung eines in der Kavität anhaftenden Süßwarenartikels erzielt wird. Die auf diese Weise erzeugte Ablösungsbewegung kann parallel zur Transportbewegung der Gießform (X-Richtung) oder seitwärts zur Transportbewegung in derselben Ebene der Gießform stattfinden (Y-Richtung) oder alternativ in einer Richtung senkrecht zur Transportebene der Gießform (vertikal) (Z-Richtung). Auch ist eine Mischbewegung horizontal/vertikal möglich, die Anteile in Richtung von X- und/oder Y- plus Z-Richtung hat.

Durch eine Kombination von Bewegungsabläufen zwischen der Gießform und der Greifanordnung ist eine effiziente und schonende Entformung eines weichen Süßwarenartikels aus der Kavität einer harten Gießform möglich.

Durch die vorgeschlagene Ablösungsbewegung kann ein erster Spalt entstehen, welcher eine Verbindung zwischen dem während der Entformung entstehenden Hohlraum am Grund der Kavität und der umgebenden Atmosphäre herstellt. So wird ein Druckausgleich in dem Hohlraum ermöglicht und die zur weiteren Entformung notwendigen Kräfte werden reduziert.

Beim Herausnehmen kann der Süßwarenartikel immer noch stellenweise anhaften. Die Saugkraft des Saugelements reicht jedoch aus, um genügend stark an dem Süßwarenartikel ziehen zu können, so dass sich der Süßwarenartikel längt und kontrahiert. Sein Durchmesser wird reduziert. Die Geschwindigkeit des Herausziehens kann in geeigneter Weise langsam durchgeführt werden. Zusammen mit der unterstützenden Ablösungsbewegung zwischen der Gießform und dem Saugelement treten vor allem zu Beginn des Ablösevorgangs im oberen Bereich der Grenzschicht des Süßwarenartikels und der Kontaktfläche der Kavität Normalkräfte auf, die ein Ablösen durch Abschälung des Süßwarenartikels von der Kontaktfläche bewirken. Vor allem weiche Süßwarenartikel begünstigen und verstärken die Wirkung von Normalkräften während der Ablösungsbewegung. Die Art der Belastung an der Grenzschicht des Süßwarenartikels ist etwa vergleichbar mit der Spannungsverteilung in einer Klebefuge, die einer Schälbelastung unterliegt.

Die Ablösungsbewegung und die zum Herausnehmen des Süßwarenartikels erforderliche Bewegung orthogonal zur Gießform können überlagert werden, um vorteilhafte schonende Entformungsergebnisse ohne Beschädigungen an dem Süßwarenartikel zu erhalten.

Von Vorteil ist es, wenn das Saugelement den Süßwarenartikel zur gleichen Zeit ansaugt wenn auch die Ablösungsbewegung in die Gießform übertragen wird. Bevorzugt wird aber zuerst der Süßwarenartikel angesogen an das Saugelement, so dass er daran bereits festgehalten wird, wenn die Ablösungsbewegung ausgeführt wird.

In einer weiteren Alternative wird zuerst die Ablösungsbewegung gestartet und der Süßwarenartikel erst dann angesogen und am Saugelement festgehalten. Diese Vorgehensweise ist z.B. für Süßwarenartikel mit unebenen Oberflächen von Vorteil, weil durch die vorherige Ablösungsbewegung bereits teilweise Ablösung des Süßwarenartikels von der Kontaktfläche der Kavität der Gießform stattfindet. Dies ermöglicht eine bessere Positionierung der Saugelemente an den Süßwarenartikel. Bei einer unebenen Oberfläche eines Süßwarenartikels kann es vorkommen, dass sich das Saugelement nicht ausreichend dicht anlegen lässt, so dass zunächst kein ausreichendes Vakuum entstehen kann. Durch eine beginnende oder bereits stattfindende Relativbewegung bewegt sich das Saugelement dann über die unebene Oberfläche bis eine Position ein ausreichendes Vakuum ermöglicht.

Als eigene jedoch nicht beanspruchte Erfindung wird ein Verfahren zur Übergabe wenigstens eines Süßwarenartikels von einer Gießform hin zu einer Ablageposition angesehen. Nach diesem Verfahren wird der Süßwarenartikel auf dem Kopf stehend aus einer Kavität der Gießform entformt und anschließend in eine aufrechte Position gedreht, so dass er in der aufrechten Position an die Ablageposition übergeben wird, wobei eine erste Greifanordnung den Süßwarenartikel mittels eines nach unten gerichteten Saugelements auf dem Kopf stehend aus der Kavität herausnimmt und in der auf dem Kopf stehenden Position in einer Zwischenposition an eine zweite Greifanordnung übergibt, wobei die zweite Greifanordnung ein drehbar angeordnetes Saugelement aufweist, das den Süßwarenartikel in der auf dem Kopf stehenden Position übernimmt, und wobei die zweite Greifanordnung den Süßwarenartikel dann in die aufrechte Position dreht und ihn an die Ablageposition übergibt. Diese Vorgehensweise hat den Vorteil, dass die Drehung des Süßwarenartikel aus der auf dem Kopf stehenden Position in die aufrechte Position einerseits und der Weg von der Zwischenposition in die Ablageposition in einem Bewegungsschritt gleichzeitig ausgeführt werden können. Außerdem kann auf diese Weise die noch relativ klebrige Unterseite des Süßwarenartikels, die auf einer Ablage oder einem Band haftet nicht mit anderen Süßwarenartikeln verkleben.

Vorzugsweise ist für das Verfahren zur Übergabe des Süßwarenartikels von der Gießform hin zur Ablageposition eine Weiterbildung vorgesehen, gemäß welcher der Süßwarenartikel nach dem eingangs vorgeschlagenen Verfahren eines der Ansprüche 1 bis 4 aus der Kavität der Gießform entformt und aus der Kavität herausgenommen wird.

Des Weiteren wird zur Lösung der obigen Aufgabe vorgeschlagen eine Vorrichtung nach Anspruch 5, zur Entformung wenigstens eines Süßwarenartikels aus einer Kavität einer Gießform, vorzugsweise umfassend wenigstens eine Gießform, sowie umfassend eine Greifanordnung mit wenigstens einem Saugelement, wobei ein Mittel zur Ausführung einer Ablösungsbewegung für einen Süßwarenartikel vorgesehen ist, dessen äußere Grenzschicht klebend in der Kavität der Gießform anhaftet, wobei über das Mittel für die Ablösungsbewegung wechselnde Kräfte, wie Zugkräfte, Druckkräfte und Scherkräfte, in den Süßwarenartikel einleitbar sind, womit an dessen Grenzschicht Verformungen erzeugbar sind, wie Dehnungen und Kontraktionen, so dass die Haftkraft des Süßwarenartikels in der Kavität in einem solchen Maße verringert wird, dass die ankoppelnden Saugkräfte des Saugelements genügen, um den Süßwarenartikel mittels des Saugelements aus der Kavität herauszunehmen.

Ein geeignetes Mittel zur Ausführung einer Ablösungsbewegung ist dazu hergerichtet, eine Rüttelung/Vibration in die Gießform einzuleiten. Zu diesem Zweck kann das Mittel mit einem einfachen Klopfelement versehen sein, das mit geeigneter Frequenz gegen die Gießform klopfen kann und diese in eine Rüttelbewegung versetzt.

Alternativ kann das Mittel zur Ausführung der Ablösungsbewegung mit einer Gießformaufnahme als Trägerelement verbunden sein, welche die Gießform trägt, beispielsweise ein Vibrationserzeuger, der mit der Gießformaufnahme gekoppelt ist. Die von der Gießformaufnahme getragene Gießform wird dann indirekt in Vibration versetzt. Der Vibrationserzeuger kann die Ablösungsbewegung der Gießformaufnahme pneumatisch oder hydraulisch erzeugen oder elektrisch.

Zweckmäßig weist die Gießformaufnahme mehrere Anschlagelemente auf, welche den Bewegungsspielraum für die Vibration der Gießform auf einen geeigneten Spielraum begrenzen. Der Spielraum ist so bemessen, dass in alle nötigen Richtungen eine Vibration mit der gewünschten Amplitude ermöglicht ist. Die Gießformaufnahme kann als ein Schwingrahmen mit Anschlagelementen ausgebildet sein. Ein rahmenförmiger möglichst leichter Aufbau ist zweckmäßig, um die zu vibrierende Masse zu reduzieren, die angeregt werden muss.

Anstelle einer Bewegungsbegrenzung für die Vibration der Gießform mittels Anschlagelementen können Klemmelemente vorgesehen sein, mit denen die Gießform an der Gießformaufnahme fixierbar ist. Die Klemmelemente können die Gießform kraftschlüssig mit der Gießformaufnahme verbinden, beispielsweise über eine Feder. Alternativ ist die Klemmkraft mit elektrisch, hydraulisch oder pneumatisch antreibbaren Klemmelementen erzeugbar. Einfacherweise sind die Klemmelemente als Klemmbacken ausgestaltet. Die Klemmelemente fixieren die Gießform vorzugsweise an zwei Stellen, vorzugsweise am Rand der Gießform.

Eine andere Alternative zur Fixierung der Gießform an der Gießformaufnahme kann dafür hergerichtet sein, eine formschlüssige Verbindung herzustellen.

Die Gießform ist vorzugsweise eine harte formstabile Gießform aus einem Metall oder aus einem festen Kunststoff.

Als Kunststoff ist bevorzugt ein Polycarbonat oder ein Polycarbonateinheiten enthaltendes Copolymer oder eine Mischung von Polycarbonat mit anderen Polymeren vorgesehen. Auch Formen aus Polyethylen, Polystyrol und Polyethylenterephthalat, gegebenenfalls durch Comonomere oder Abmischung modifiziert, erfüllen den Zweck.

Das Mittel zur Ausführung der Ablösungsbewegung ist zweckmäßig dafür hergerichtet, eine oszillierende Ablösungsbewegung zu erzeugen. Die Oszillation kann eine translatorische hin und her Bewegung sein oder eine umlaufende Bewegung, bei der mittels einer Unwucht eine umlaufende mechanische Schwingung erzeugt wird.

Die Relativbewegung der Gießform, sei sie linear oder umlaufend, kann kombiniert werden mit einer vertikalen Bewegung der Bewegungseinheit für die Greifanordnung, die mit dem Saugelement versehen ist, um den Süßwarenartikel aus der Kavität herauszunehmen.

Eine weitere Ausführungsform ist so ausgebildet, dass die Gießform stillstehen bleibt und stattdessen eine Bewegungseinheit für das Saugelement vorgesehen ist, um diesem eine Ablösungsbewegung aufzuprägen, es z.B. in eine Vibration zu versetzen. Das Saugelement saugt also nicht nur mittels des bereitgestellten Unterdrucks den Süßwarenartikel an und hält diesen daran fest, sondern überträgt bei dieser Ausführungsform auch die Vibration in den Boden des auf dem Kopf stehenden Süßwarenartikels. Dadurch werden Kräfte in den Boden des auf dem Kopf stehenden Süßwarenartikel eingeleitet, welche im oberen Bereich der Kavität Dehnungen und Kontraktionen innerhalb des Süßwarenartikels verursachen. Mit diesen Kräften wird eine beginnende Ablösung des Süßwarenartikels vor allem im oberen Bereich der Kavität der Gießform erzielt.

Die vorliegende Erfindung ist für die Verarbeitung von Süßwarenmassen gedacht, welche im Gegensatz zu schokoladeartigen Zubereitungen beim Abkühlen nicht wesentlich schrumpfen und außerdem relativ fest klebend an der Kavität der Gießform anhaften. Darüber hinaus besteht die Gießform aus einem harten, nicht gummielastischen Material. Mit diesen Voraussetzungen wird vorgeschlagen, dass die Kontaktfläche der Kavität der Gießform mit einem Trennmittel versehen wird, wie in der DE 10 2007 031 747 A1 vorgeschlagen. Deren Lehre zur Benetzung der Kontaktfläche der Kavität mit einem Trennmittel wird per Verweis hier eingebunden. Das Trennmittel kann dafür sorgen, dass der Süßwarenartikel weniger stark an einer Kontaktfläche der Kavität anhaftet und der Süßwarenartikel leichter entformt werden kann. Die Trennwirkung ist jedoch davon abhängig, wie gut die Benetzung der Kavität gelingt. Bei einer Benetzung mittels Sprühdüsen hat sich gezeigt, dass im oberen Bereich der Kavität tendenziell weniger Trennmittel wirksam trennen kann, weil es vorher hinabrinnen kann und sich am Grund der Kavität sammelt. Daher treten bisweilen klebende Haftkraft des Süßwarenartikels im oberen Bereich der Kavität der Gießform auf, obwohl ein Trennmittel eingesetzt wurde.

Wenn in der Kavität Bereiche der Grenzschicht des Süßwarenartikels trotz Einsatz eines Trennmittels kleben bleiben, dann geschieht dies hauptsächlich an recht steilen Bereichen der Kontaktfläche der Kavität, welche sich in der Regel im oberen Bereich der Kavität befinden. Hilfreich ist es dann, eine Ablösungsbewegung zu erzeugen, die besonders im oberen Bereich der Kavität eine Ablösung des Süßwarenartikels von deren Kontaktfläche befördern kann. Sobald an einer Stelle am oberen Bereich der Kavität eine Ablösung beginnt, kann sie sich leichter umfänglich fortsetzen. Die Ablösung wird von dem Saugelement unterstützt, wenn es an dem Süßwarenartikel zieht, um ihn aus der Kavität herauszunehmen. Gerade an jenen Stellen, an denen eine Benetzung mit Trennmittel schwierig ist, kann die Ablösungsbewegung eine beschädigungsfreie Entformung des Süßwarenartikels ermöglichen.

Nutzbringend ist es, wenn eine Bewegungseinheit für die Greifanordnung vorgesehen ist, und wenn die Greifanordnung mittels der Bewegungseinheit zumindest in zwei Bewegungsrichtungen verfahrbar ist und zwar vorzugsweise translatorisch in einer Seitwärtsrichtung hin und her sowie in einer Vertikalrichtung auf- und abwärts.

Nutzbringend kann die Greifanordnung eine Luftkammer aufweisen und wenigstens zwei an die Luftkammer angeschlossene Saugelemente vorgesehen sein, wobei zweckmäßig jedes Saugelement mit einem Strömungswiderstand versehen ist.

Einfacherweise ist der Strömungswiderstand als eine Blende im Saugelement ausgebildet, beispielsweise in Form einer kleinen Bohrung. Mit der gemeinsamen Luftkammer der Greifanordnung ist es möglich, ein Teilvakuum gemeinsam an alle Saugelemente 6 gleichzeitig anzulegen.

Dabei kann es vorkommen, dass für eines der Saugelemente kein Süßwarenartikel vorhanden ist, womit einhergeht, dass von diesem Saugelement Außenluft angesaugt wird. Durch den eingebauten Strömungswiderstand wird der Volumenstrom der angesaugten Außenluft geringgehalten. Daher kann die Vorrichtung auch dann betrieben werden, wenn nicht für alle Saugelemente ein Süßwarenartikel vorhanden ist, solange immer noch ein ausreichendes Teilvakuum bleibt, um die vorhandenen Süßwarenartikel ausreichend festzuhalten für den Zweck der Entformung aus einer Gießform.

Ebenfalls als Erfindung angesehen wird eine Vorrichtung zur Übergabe wenigstens eines Süßwarenartikels aus einer Ausgangsposition, in welcher der Süßwarenartikel in einer Kavität einer Gießform anhaftet und aus der Kavität entformbar ist, hin zu einer Ablageposition, vorzugsweise umfassend wenigstens eine Gießform mit wenigstens einer Kavität, sowie umfassend eine erste Greifanordnung mit wenigstens einem nach unten gerichteten Saugelement und einer Bewegungseinheit für eine Bewegung des Süßwarenartikels von der Ausgangsposition hin zu einer Zwischenposition, wobei eine zweite Greifanordnung vorgesehen ist, die eine Drehachse aufweist und wenigstens ein Saugelement, das um die Drehachse bewegbar angeordnet ist, und wobei für die zweite Greifanordnung wenigstens zwei funktionale Drehpositionen definiert sind, eine Aufnahmeposition mit nach oben gerichtetem Saugelement sowie eine Ablageposition mit nach unten gerichtetem Saugelement.

Für die vorgenannte Vorrichtung, welche zur Übergabe des Süßwarenartikels aus der Ausgangsposition, in welcher er in der Kavität der Gießform anhaftet, hin zu der Ablageposition vorgesehen ist, wird darüber hinaus vorgeschlagen, für die Entformbarkeit des Süßwarenartikels aus der Kavität vorzugsweise eine Vorrichtung wie in der Folge beschrieben vorzusehen.

Für die Vorrichtung zur Übergabe des Süßwarenartikels aus der Ausgangsposition hin zu der Ablageposition ist zweckmäßig vorgesehen, dass die Zwischenposition der ersten Greifanordnung sich mit der Aufnahmeposition der zweiten Greifanordnung deckt.

Des Weiteren kann die Vorrichtung zur Übergabe des Süßwarenartikels hin zu der Ablageposition verbessert werden, indem die Drehachse der zweiten Greifanordnung so angeordnet und hergerichtet ist, das mittels einer Drehung aus der Aufnahmeposition hinein in die Ablageposition der Süßwarenartikel aus der auf dem Kopf stehenden Position in die aufrecht stehende Position gedreht und gleichzeitig von der Aufnahmeposition zur Ablageposition transportierbar ist.

Nachstehend sind Ausführungsbeispiele der Erfindung in einer Zeichnung beispielhaft dargestellt und anhand mehrerer Figuren detailliert beschrieben. Es zeigen:
- Fig. 1:: Ein Ausführungsbeispiel einer Vorrichtung zur Entformung von anhaftenden Süßwarenartikeln aus den Kavitäten einer Gießform,
- Fig. 2:: Das Ausführungsbeispiel gemäß Fig. 1 beim Schritt der Ankopplung der Süßwarenartikel an eine Greifanordnung sowie der Einleitung einer Ablösungsbewegung in die Gießform,
- Fig. 3:: Das Ausführungsbeispiel gemäß Fig. 1 beim Herausnehmen der angekoppelten Süßwarenartikel aus der Gießform,
- Fig. 4:: Das Ausführungsbeispiel gemäß Fig. 1, wobei die Greifanordnung seitlich zu einer Übergabestelle bewegt worden ist und die Süßwarenartikel auf dem Kopf stehend übergeben hat,
- Fig. 5:: Ein Ausführungsbeispiel einer Vorrichtung zur Übergabe von Süßwarenartikel aus einer Ausgangsposition in einer Kavität einer Gießform hin zu einer Ablageposition, umfassend eine erste und eine zweite Greifanordnung,
- Fig. 6:: Das Ausführungsbeispiel gemäß Fig. 5 bei der Übergabe der Süßwarenartikel auf dem Kopf stehend in eine Zwischenposition an die zweite Greifanordnung,
- Fig. 7:: Das Ausführungsbeispiel gemäß Fig. 5 nach einer Bewegung der zweiten Greifanordnung von einer Aufnahmeposition in eine Ablageposition mit nach unten gerichtetem Saugelement,
- Fig. 8:: Eine vergrößerte Darstellung des Ausschnitts VIII mit Saugelement in Fig. 1,
- Fig. 9:: Eine vergrößerte Ansicht des Entformungsvorgangs.

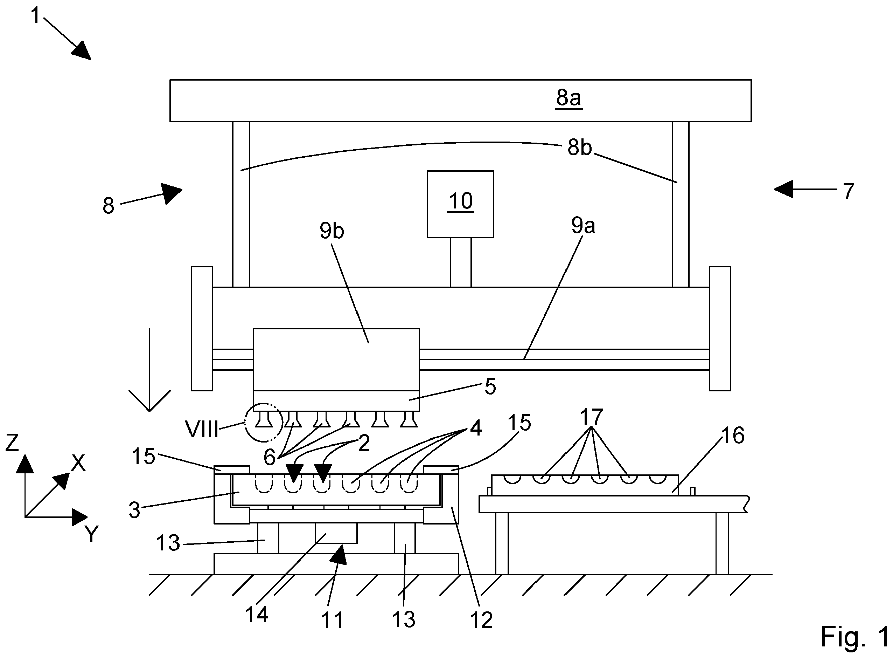

Die Figuren 1 bis 4 zeigen schematische Darstellungen eines Ausführungsbeispiels der erfindungsgemäßen Vorrichtung 1, die zur Entformung eines Süßwarenartikels 2 aus einer Gießform 3 vorgesehen ist, welcher Süßwarenartikel 2 klebrige anhaftende Eigenschaften hat. Mit dieser Vorrichtung kann das erfindungsgemäße Verfahren ausgeübt werden, mit dem die Haftkraft des Süßwarenartikels 2 vermindert wird, so dass er aus einer Kavität 4 der Gießform 3 herausgenommen werden kann.

Die Gießform 3 kann als Teil der Vorrichtung 1 betrachtet werden. Sie weist in dem Beispiel sechs Kavitäten 4 auf, welche in einer Reihe angeordnet sind. Die Vorrichtung 1 ist darüber hinaus mit einer Greifanordnung 5 versehen, die Saugelemente 6 aufweist. Passend zur Anzahl und Position der Kavitäten 4 sind sechs Saugelemente 6 an der Greifanordnung 5 vorgesehen. Des Weiteren ist eine Bewegungseinrichtung 7 für die Greifanordnung 5 vorgesehen, mit der sie auf und ab bewegbar ist (Z-Richtung) sowie seitwärts bewegbar (Y-Richtung).

Die Bewegungseinrichtung 7 verfügt für die Auf- und Abbewegbarkeit der Greifanordnung 5 (Z-Richtung) über eine Hubeinheit 8 und für die seitwärts Bewegbarkeit der Greifanordnung in Y-Richtung ist die Bewegungseinrichtung 7 mit einer Seitwärtseinheit 9 versehen. Die Hubeinheit 8 umfasst ein Tragelement 8a, das mittels eines Vertikalantriebs und einer vertikalen Führungseinheit 8b auf und ab bewegbar ist. Die Seitwärtseinheit 9 umfasst einen Horizontalantrieb und eine horizontal angeordnete Linearführung 9a mit einem Schlittenelement 9b, an dem die Greifanordnung angeordnet ist.

Die Gießform 3 ist darüber hinaus in einer Transportrichtung (X-Richtung) hin und weg transportierbar von der erfindungsgemäßen Vorrichtung 1. Die Transportrichtung der Gießform 3 liegt in deren Ebene sowie rechtwinklig zur seitwärts Beweglichkeit der Greifanordnung 5 (Y-Richtung). In Fig. 1 sind die dreidimensionalen Koordinaten X, Y, Z symbolhaft dargestellt, wobei die X-Richtung relativ zu der (nur) zweidimensionalen Darstellung der Fig. 1 senkrecht orientiert ist.

Gemäß Fig. 1 umfasst die Vorrichtung des Weiteren eine Vakuumeinrichtung 10 zur Erzeugung eines Teilvakuums. Mit Teilvakuum ist ein geringerer Druck (Unterdruck) im Vergleich zum atmosphärischen Luftdruck jener Umgebung gemeint, in der sich die Vorrichtung befindet. Die Vakuumeinrichtung 10 ist verbunden mit den Saugelementen 6 der Greifanordnung 5. Über eine Steuerungseinrichtung (nicht dargestellt) und einer entsprechenden Verschlauchung kann das Teilvakuum an die Saugelemente 6 angelegt zu diesem Zweck zu- und abgeschaltet werden. Entweder ist die Steuerungseinrichtung beziehungsweise die Verschlauchung so hergerichtet beziehungsweise programmiert, dass die Saugwirkung für alle Saugelemente gemeinsam zu- und abschaltbar ist oder jedes einzelne Saugelement ist individuell zu- und abschaltbar.

Die Vorrichtung gemäß Fig. 1 weist darüber hinaus ein Mittel 11 zur Ausführung einer Ablösungsbewegung auf. Mit dem Mittel 11 sind wechselnde Kräfte in den Süßwarenartikel einleitbar, die bis an dessen Grenzschicht heranreichen und in dem Material des Süßwarenartikels Verformungen erzeugen, insbesondere Dehnungen und Kontraktionen. Durch diese Verformungen lässt sich die Haftkraft des Süßwarenartikels in der Kavität der Gießform verringern. Die Haftkraft kann in einem solchen Maße verringert werden, dass die Saugkräfte des Saugelements genügen, um den Süßwarenartikel mittels des Saugelements und mit Hilfe der Hubeinheit 8 aus der Kavität herauszunehmen, in dem die Hubeinheit 8 der Bewegungseinrichtung 7 die Greifanordnung 5 aufwärtsbewegt. Sollte noch eine Resthaftkraft vorhanden sein, dann wird diese während der Aufwärtsbewegung der Greifanordnung gelöst.

Im vorliegenden Beispiel umfasst das Mittel 11 zur Ausführung der Ablösungsbewegung eine Gießformaufnahme 12, die mit Schwinglagern 13 versehen ist. An der Gießformaufnahme 12 ist ein Vibrationserzeuger 14 angeordnet, der die Gießformaufnahme 12 in eine Vibration oder Rüttelbewegung versetzen kann.

Um die Vibration effizient in die Gießform 3 übertragen zu können ist die Gießformaufnahme 12 rahmenartig ausgebildet und weist obere Leistenelemente 15 auf.

Im vorliegenden Beispiel ist vorgesehen, dass die Leistenelemente 15 eine Spannkraft auf die Oberseite der Gießform ausüben können, um sie an der Gießformaufnahme 12 klemmend zu fixieren. So wird eine kraftschlüssige Verbindung zwischen der Gießform 3 und der Gießformaufnahme 12 erzeugt, so dass die Gießform 3 synchron mit der Gießformaufnahme 12 vibriert.

Alternativ kann die rahmenartig ausgebildete Gießformaufnahme 12 inklusive der obere Leistenelemente 15 so hergerichtet sein, dass ein gewisser Bewegungsspielraum für die Gießform bleibt, so dass die Gießform innerhalb des Bewegungsspielraums unabhängig von der Gießformaufnahme 12 vibrieren kann.

Seitlich neben der Gießformaufnahme 12 ist ein Ablageelement 16 vorgesehen, das sechs Aufnahmeelemente 17 aufweist. Die Aufnahmeelemente 17 sind dafür hergerichtet die Süßwarenartikel 2 auf dem Kopf stehend aufzunehmen. Das Aufnahmeelement 17 ist in diesem Ausführungsbeispiel ein Teil einer Produktverpackung.

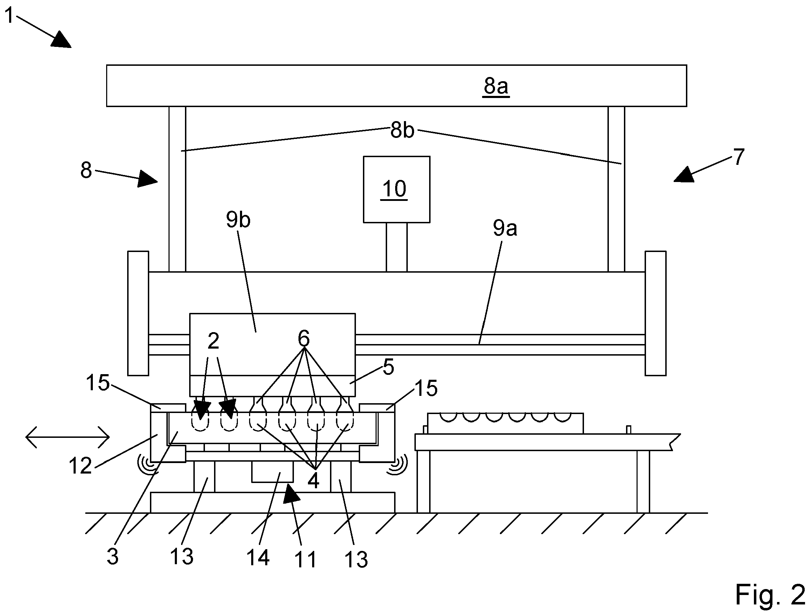

Fig. 2 zeigt die Vorrichtung gemäß Fig. 1 während der Verfahrensschritt des Vibrierens der Gießformaufnahme 12 im Gange ist. Außerdem ist der Verfahrensschritt des Ansaugens der Süßwarenartikel durch die Saugelemente 6 im Gange.

Die Hubeinheit 8 hat die Greifanordnung 5 abwärts bewegt, was in diesem Beispiel auch die Seitwärtseinheit 9 einschließt. Auf diese Weise kommen die Saugelemente 6 mit den Böden der Süßwarenartikel in Kontakt. Das von der Vakuumeinrichtung bereitgestellte Teilvakuum ist an die Saugelemente 6 angelegt und der Boden jedes der Süßwarenartikel 2 wird auf diese Weise festgehalten während gleichzeitig die Vibration der Gießformaufnahme 12 im Gange ist oder dann in Gang gebracht wird.

Die Vibration wird von der Gießformaufnahme 12 in die Gießform 3 übertragen. Von der Gießform 3 gelangt die Vibration in den Süßwarenartikel. An der klebend anhaftenden Grenzschicht des Süßwarenartikels 2 wirkt die Vibration als Ablösungsbewegung, weil die in den Süßwarenartikel eingeleiteten Zug-, Druckkräfte und Scherkräfte Dehnungen und Kontraktionen in dem Material des Süßwarenartikels verursachen, welche sich bis an seine äußere Grenzschicht auswirken und dort die Haftkraft an der Kontaktfläche der Kavität 4 verringern.

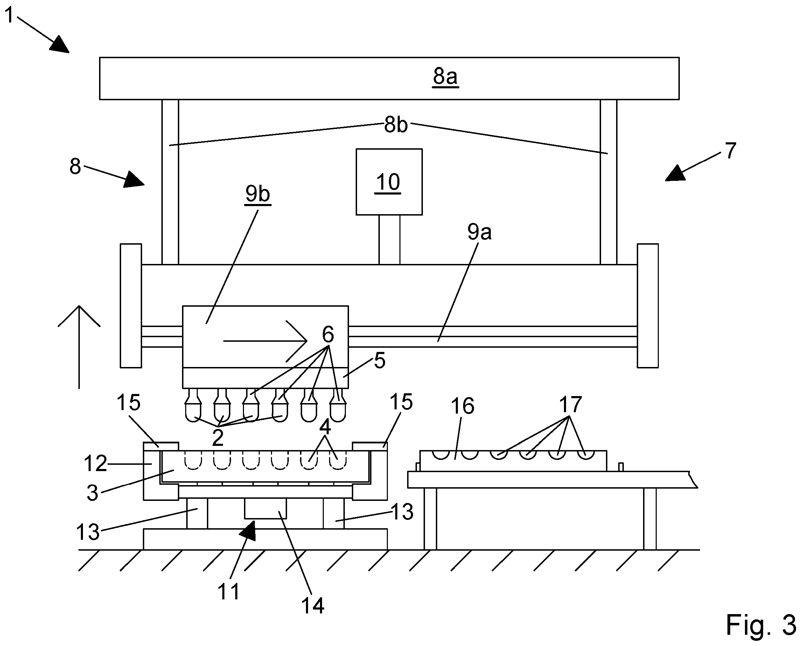

Als nächstes ist in Fig. 3 gezeigt, wie der Süßwarenartikel 2 aus den Kavitäten 4 der Gießform 3 herausgenommen wird.

Der Vibrationserzeuger 14 ist gestoppt und die Greifanordnung 5 mittels der Hubeinheit 8 der Bewegungseinrichtung 7 aufwärtsbewegt worden, so dass die Süßwarenartikel 2 endgültig entformt sind.

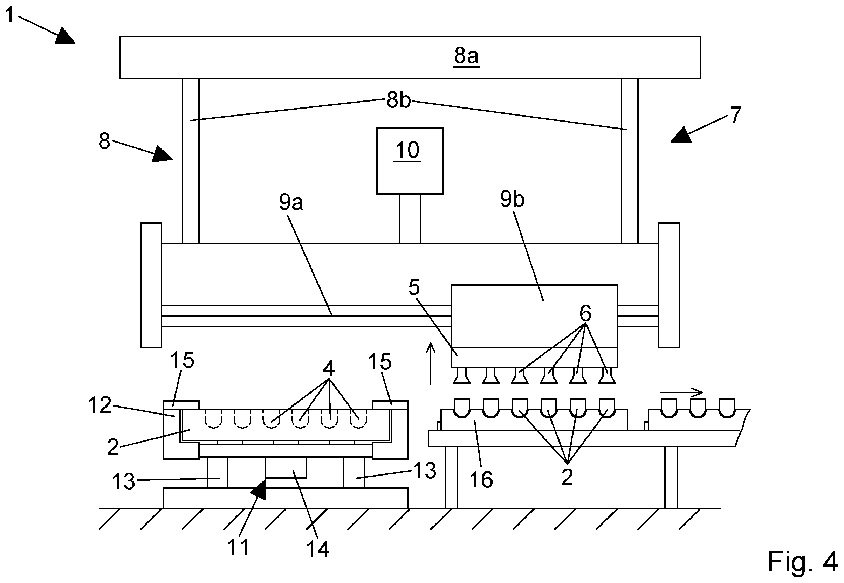

Anschließend wird, wie in Fig. 4 dargestellt, die Greifanordnung 5 mittels der Seitwärtseinheit 9 über die Gießformaufnahme weg bewegt hin zu einer Position über dem Ablageelement 17. Fig. 4 zeigt bereits den Zustand, nach dem die Hubeinheit in dieser Position abgesenkt wurde, um die Süßwarenartikel 2 abzulegen. Dafür ist das Teilvakuum an den Saugelementen abgeschaltet worden und die Süßwarenartikel 2 sind in die Aufnahmeelemente 17 übergegangen. Zur Übergabe des Süßwarenartikels 2 von den Saugelementen 6 kann ein Druckluftimpuls eingesetzt werden. Dafür wird das an das Saugelement 6 angelegte Vakuum abgeschaltet und stattdessen der Druckluftimpuls ausgelöst. Der Süßwarenartikel kann auf diese Weise von dem Saugelement 6 abgestoßen werden. Außerdem ist die Greifanordnung 5 gemeinsam mit der Seitwärtseinheit 9 bereits wieder aufwärtsbewegt worden. Die Saugelemente 6 sind "leer". Aus dieser Position wird die Greifanordnung 5 mittels der Seitwärtseinheit 9 zurückbewegt in ihre Position über der Gießformaufnahme 12, wie in Fig. 1 gezeigt und der Prozess kann mit der folgenden Gießform 3 wiederholt werden.

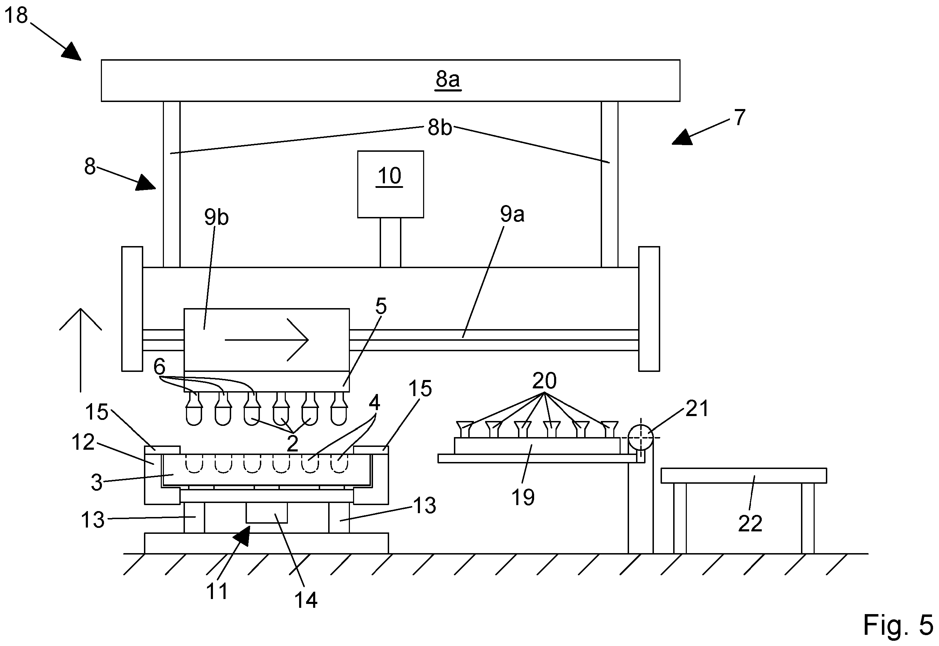

Fig. 5 stellt eine Vorrichtung 18 zur Übergabe wenigstens eines Süßwarenartikels 2 dar, der aus einer Kavität 4 einer Gießform 3 in zwei Schritten hin zu einer Ablageposition übergeben wird (Übergabevorrichtung). Zu diesem Zweck umfasst die Übergabevorrichtung 18 eine erste und eine zweite Greifanordnung.

Die Übergabevorrichtung 18 ist in weiten Teilen identisch mit der Vorrichtung gemäß den Figuren 1 bis 4, so dass für identische Merkmale identische Bezugszeichen übernommen werden. D. h. die Übergabevorrichtung 18 umfasst ebenfalls eine Bewegungseinrichtung 7 mit einer Hubeinheit 8 und einer Seitwärtseinheit 9. Ebenfalls ist eine Vorrichtung zur Entformung integriert, die eine Vakuumeinrichtung 10 für die Saugelemente der ersten Greifanordnung umfasst sowie ein Mittel zur Erzeugung einer Ablösungsbewegung, eine Gießformaufnahme 12 auf Schwinglagern 13 sowie einen Vibrationserzeuger 14.

Die Übergabevorrichtung 18 unterscheidet sich von der Vorrichtung 1 der Figuren 1 bis 4 nur dadurch, dass eine schon erwähnte zweite Greifanordnung 19 vorgesehen ist. Die zweite Greifanordnung 19 ersetzt das in den Figuren 1 bis 4 vorgesehene Ablageelement 16. Die erste Greifanordnung gemäß Fig. 5 ist hingegen mit der Greifanordnung gemäß den Figuren 1 bis 4 identisch.

Im vorliegenden Beispiel ist die Gießform 3 wiederum mit sechs Kavitäten 4 versehen. Die Position der Gießform 3, respektive deren Kavitäten 4, wie in Fig. 5 gezeigt, bilden eine Ausgangsposition. Von dieser Ausgangsposition beginnt die Übergabe der Süßwarenartikel 2 mittels der ersten Greifanordnung 5.

Das in Fig. 5 gezeigte Verfahrensstadium entspricht dem Stadium in Fig. 3, weil die erste Greifanordnung 5 die Süßwarenartikel, wie in Fig. 3, bereits entformt und aus den Kavitäten der Gießform 3 herausgehoben hat. Der Vibrationserzeuger 14 ist gestoppt und die erste Greifanordnung 5 ist mittels der Hubeinheit 8 der Bewegungseinrichtung 7 aufwärtsbewegt worden, so dass die Süßwarenartikel 2 entformt sind.

Die zweite Greifanordnung 19 ist in Fig. 5 in einer Zwischenposition, in welcher die Süßwarenartikel 2 auf dem Kopf stehend übernommen werden. Dafür weist die zweite Greifanordnung 19 sechs Saugelemente 20 auf, die in der gezeigten Zwischenposition nach oben gerichtet sind. Die Saugelemente 20 sind so beschaffen, dass sie die auf dem Kopf stehenden Süßwarenartikel 2 quasi an deren nach unten gerichteter Oberseite ansaugen und festhalten können. Die Saugelemente 20 der zweiten Greifanordnung 19 sind mit der Vakuumeinrichtung 10 verbunden und über eine Steuerungseinrichtung mit entsprechender Verschlauchung (nicht dargestellt) kann ein Teilvakuum an die Saugelemente 20 angelegt und zu diesem Zweck zu- und abgeschaltet werden. Die Steuerungseinrichtung beziehungsweise die Verschlauchung ist so hergerichtet beziehungsweise programmiert, dass die Saugwirkung für alle Saugelemente 20 gemeinsam zu- und abschaltbar ist oder jedes einzelne Saugelement 20 ist individuell zu- und abschaltbar.

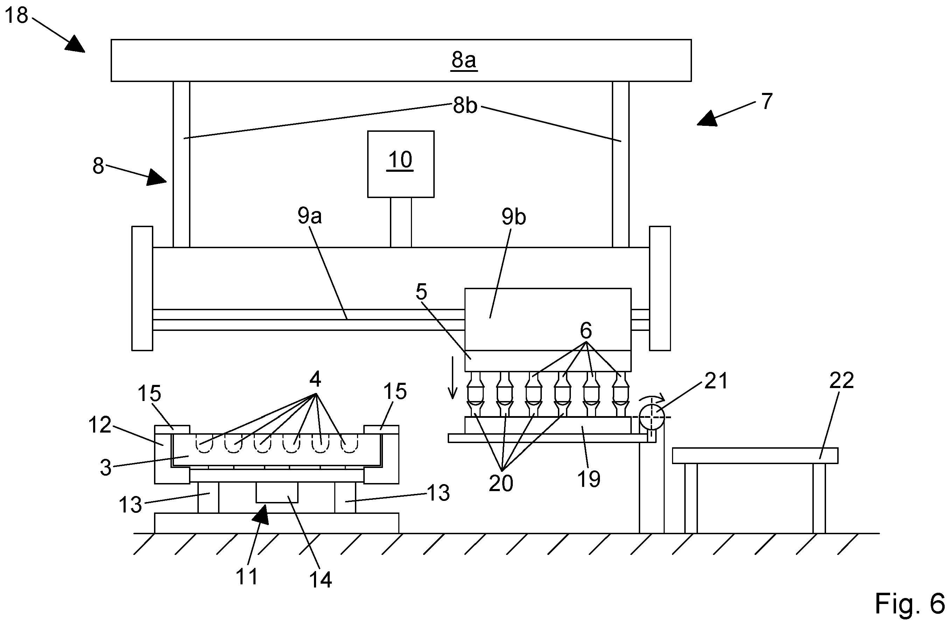

Fig. 6 zeigt das Verfahrensstadium, in dem die Übergabe der Süßwarenartikel von den nach unten gerichteten Saugelementen 6 der ersten Greifanordnung 5 an die nach oben gerichteten Saugelemente 20 der zweiten Greifanordnung 19 erfolgt. In diesem Zeitpunkt wird die Saugwirkung für die Saugelemente 6 der ersten Greifanordnung abgeschaltet und die Saugwirkung für die Saugelemente 20 der zweiten Greifanordnung 19 eingeschaltet.

Die zweite Greifanordnung 19 ist des Weiteren mit einer Drehachse 21 versehen, um die herum die zweite Greifanordnung 19 drehbar ist. Die Drehachse 21 weist einen Drehantrieb auf (nicht dargestellt). Für die zweite Greifanordnung sind zwei funktionale Drehpositionen definiert und zwar eine Aufnahmeposition, wie in Fig. 5 gezeigt, mit nach oben gerichteten Saugelementen 20 sowie eine um 180° um die Drehachse 21 gedrehte Ablageposition, in der die Saugelemente 20 nach unten gerichtet sind. Die Aufnahmeposition der zweiten Greifanordnung 19 deckt sich mit der Zwischenposition der ersten Greifanordnung 5.

Die Drehachse 21 der zweiten Greifanordnung ist so angeordnet, das mittels einer Drehung aus der Aufnahmeposition hinein in die Ablageposition die Süßwarenartikel 2 einerseits umgedreht werden aus deren kopfüberstehender Position in die aufrechtstehende Position, welche sie in der Ablageposition einnehmen sollen. Gleichzeitig werden die Süßwarenartikel 2 über die nötige Strecke per Drehbewegung von der Aufnahmeposition zur Ablageposition transportiert.

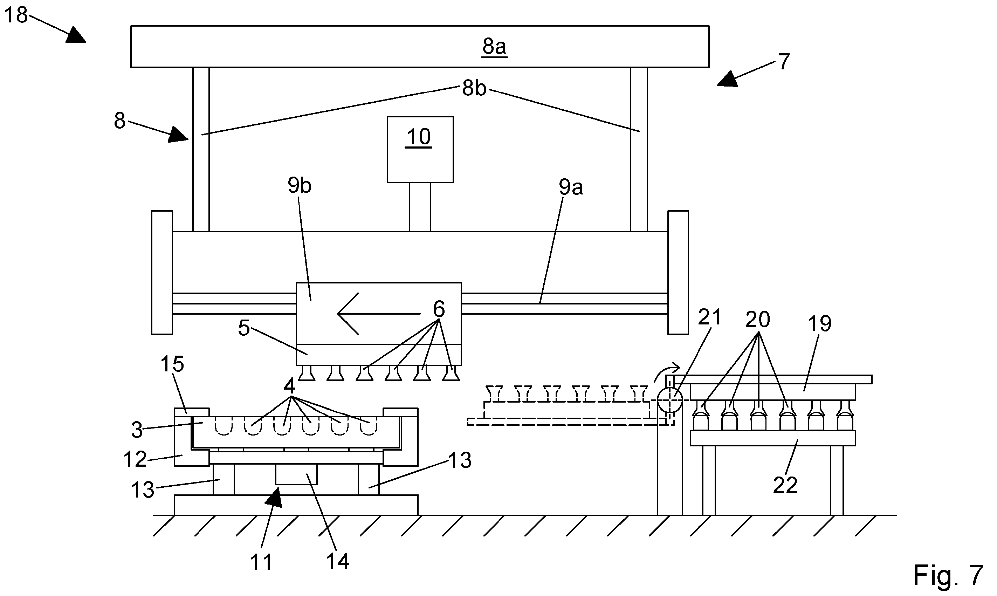

Fig. 7 stellt den Verfahrensschritt dar, mit dem die Übergabevorrichtung 18 die Süßwarenartikel 2 mittels der zweiten Greifanordnung 20 in die Abgabeposition übergibt. Für die Abgabeposition ist gemäß den Figuren 5 bis 7 eine Ablageplatte 22 vorgesehen. In dem Verfahrensstadium der Fig. 7 wird die Saugwirkung der Saugelemente 20 abgeschaltet, so dass die Süßwarenartikel 2 dann auf der Ablageplatte 22 stehen. Anschließend kann die zweite Greifanordnung 19 wieder um 180° um die Drehachse 21 zurück in die Aufnahmeposition gedreht werden, um die Verfahrensschritte zu wiederholen.

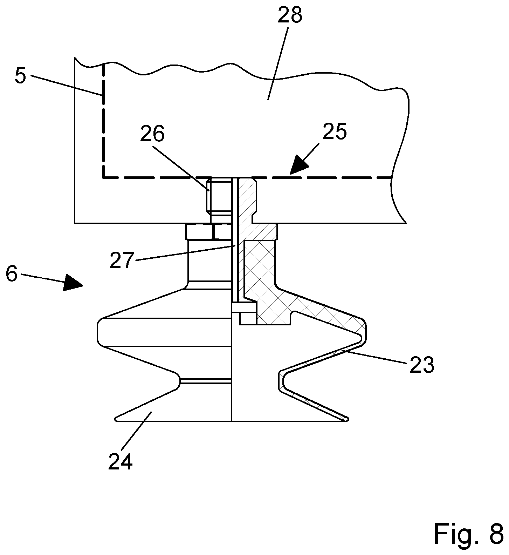

Fig. 8 zeigt eine vergrößerte Darstellung des mit VIII vermerkten Ausschnitts in Fig. 1. Der Ausschnitt VIII beinhaltet ein Saugelement 6. Das Saugelement 6 weist gemäß Fig. 8 einen Faltenbalg 23 auf, der vorzugsweise aus Silikon oder Kautschuk besteht. Im vorliegenden Beispiel ist der Faltenbalg 23 mit einem runden Querschnitt versehen. Das Saugelement hat einen sich trichterförmig öffnenden Saugrand 24. Diese Gestaltung hat sich als zweckmäßig herausgestellt, um Süßwarenartikel ausreichend festhalten zu können, wenn ein Süßwarenartikel in der Kavität einer Gießform festhaftet und die Gießform in Vibration versetzt wird, um diese Haftkraft zu lösen.

Außerdem eignet sich das Saugelement 6 mit Faltenbalg 23 auch gut um unebene Oberflächen saugend greifen zu können. Im vorliegenden Fall muss die zweite Greifanordnung die Oberseite der Süßwarenartikel 2 greifen können. Die Oberseite der Süßwarenartikel ist im Vergleich zum flachen Boden des Süßwarenartikels eher uneben und für ein Saugelement schwieriger zu greifen.

Das Saugelement weist ein Anschlussende 25 mit einem Befestigungsgewinde 26 auf sowie mit einem zentralen Kanal 27 zur Verbindung des Saugelements 6 über eine Vakuumleitung (nicht dargestellt) mit der Vakuumeinrichtung 10.

Abgesehen von der oben beschriebenen Beschaffenheit des Saugelements kann jedes Saugelement 6 des Weiteren über einen Strömungswiderstand mit einer kleinen Bohrung (nicht dargestellt) mit einer gemeinsamen Luftkammer 29 in der Greifanordnung 5 verbunden sein. Auf diese Weise ist es möglich, ein Teilvakuum gemeinsam an alle Saugelemente 6 anzulegen.

Dabei kann es vorkommen, dass für eines der Saugelemente 6 kein Süßwarenartikel vorhanden ist, womit einhergeht, dass von diesem Saugelement 6 Außenluft angesaugt wird. Durch den eingebauten Strömungswiderstand wird der Volumenstrom der angesaugten Außenluft geringgehalten. Daher kann die Vorrichtung auch dann betrieben werden, wenn nicht für alle Saugelemente 6 ein Süßwarenartikel vorhanden ist, solange immer noch ein ausreichendes Teilvakuum bleibt, um die vorhandenen Süßwarenartikel ausreichend festzuhalten für den Zweck der Entformung aus einer Gießform.

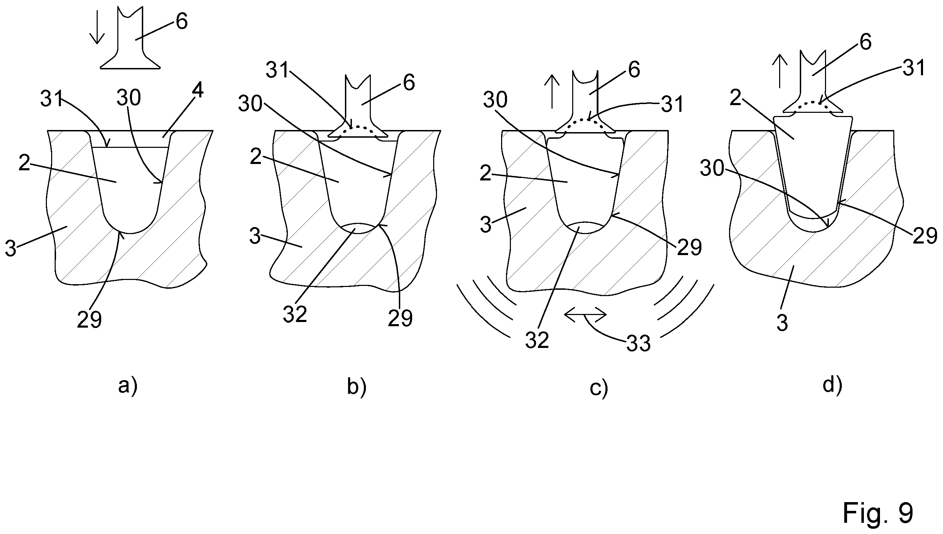

Anhand von Fig. 9 ist eine Entformung eines Süßwarenartikels 2 aus einer Kavität 4 einer Gießform 3 in vier Verfahrensschritten a) - d) dargestellt. Im ersten Verfahrensschritt a) befindet sich der Süßwarenartikel 2 auf dem Kopf stehend in der Kavität 4, wobei eine Grenzschicht 30 des Süßwarenartikels 2 lückenlos an einer Kontaktfläche 31 der Kavität 4 anhaftet. In diesem ersten Verfahrensschritt a) wird ein Saugelement 6 an einen Boden 32 des Süßwarenartikels 2 heranbewegt.

Im zweiten Verfahrensschritt b) hat das Saugelement 6 den Boden 32 des Süßwarenartikels 2 angesaugt und hält ihn fest. Der Boden 32 ist leicht kalottenförmig gewölbt und ragt ein Stück weit in das Saugelement 6 hinein. Am Grund der Kavität 4 hat sich der Süßwarenartikel 2 teilweise von der Kontaktfläche 31 abgelöst und sich dadurch ein Hohlraum 33 gebildet. In dem Hohlraum 33 ist ein Unterdruck entstanden. Der Unterdruck hält den Süßwarenartikel 2 saugend in der Kavität 4 fest.

In einem dritten Verfahrensschritt c) wird der Boden 32 des Süßwarenartikels 2 weiterhin festgehalten, wie im vorigen Verfahrensschritt a) und zusätzlich findet eine Ablösungsbewegung 34 in Form einer Vibration der Gießform 3 statt. Durch die Ablösungsbewegung 34 wird die Haftkraft des Süßwarenartikels 2 in der Kavität 4 derart verringert, dass er in einem anschließenden vierten Verfahrensschritt aus der Kavität 4 entformt werden kann, indem er aus der Kavität 4 herausbewegt wird.

In der Darstellung des vierten Verfahrensschritts d) ist der Süßwarenartikel 2 rundherum vollständig von der Kontaktfläche 31 der Kavität 4 abgelöst und bereits um ein kleines Stück aus der Kavität 4 herausbewegt. Die weitere vollständige Entformung des Süßwarenartikels 2 gelingt dann problemlos.

### Verfahren und Vorrichtung zur Entformung eines Süßwarenartikels aus einer Gießform

### Bezugszeichenliste

- 1: Vorrichtung zum Entformen
- 2: Süßwarenartikel
- 3: Gießform
- 4: Kavität
- 5: Greifanordnung
- 6: Saugelement
- 7: Bewegungseinrichtung
- 8: Hubeinheit
- 8A: Trageelement
- 8B: Führungseinheit (vertikal)
- 9: Seitwärtseinheit
- 9A: Linearführung (horizontal)
- 9B: Schlittenelement
- 10: Vakuumeinrichtung
- 11: Mittel für Ablösungsbewegung
- 12: Gießformaufnahme
- 13: Schwinglager
- 14: Vibrationserzeuger
- 15: Leistenelement
- 16: Ablageelement
- 17: Aufnahmeelement
- 18: Übergabevorrichtung
- 19: zweite Greifanordnung
- 20: Saugelement
- 21: Drehachse
- 22: Ablageplatte
- 23: Faltenbalg
- 24: Saugrand
- 25: Anschlussende
- 26: Befestigungsgewinde
- 27: zentraler Kanal

- 29: Luftkammer
- 30: Grenzschicht
- 31: Kontaktfläche
- 32: Boden
- 33: Hohlraum
- 34: Ablösungsbewegung

## Patentansprüche

1. Verfahren zur Entformung wenigstens eines Süßwarenartikels (2) aus einer Gießform (3), wobei der Süßwarenartikel (2) mittels einer Greifanordnung (5) auf dem Kopf stehend aus einer Kavität (4) der Gießform (3) entformt wird, wobei die Greifanordnung (5) wenigstens ein Saugelement (6) umfasst, dieses Verfahren umfassend:
- Ansaugen des nach oben stehenden im Wesentlichen flachen Bodens (32) des Süßwarenartikels (2) mittels des Saugelements (6),
- bevor oder nachdem das Saugelement (6) den Boden (32) des Süßwarenartikels (2) angesogen hat, Erzeugen einer zusätzlichen oszillierenden oder umlaufenden Ablösungsbewegung, die von der Gießform (3) und/oder dem Saugelement (6) ausgeführt wird und wechselnde Kräfte in den Süßwarenartikel (2) einleitet,
- Erzeugen von Verformungen in dem Süßwarenartikel (2) mittels der Ablösungsbewegung, wobei die Verformungen sich bis an die äußere Grenzschicht des Süßwarenartikels (2) auswirken und seine Haftkraft an der Kontaktfläche der Kavität (4) verringern und die Haftkraft zumindest teilweise lösen,
- Vollständiges Herausnehmen des Süßwarenartikels (2) von dem Saugelement (6) aus der Kavität (4), und
- Übergeben des auf dem Kopf stehenden Süßwarenartikels (2) durch Abschaltung des Unterdrucks,
- wobei für die Ablösungsbewegung einerseits das Saugelement (6) den Boden (32) des Süßwarenartikels (2) kontaktiert, ansaugt und festhält und andererseits eine Relativbewegung zwischen dem Saugelement (6) und der Gießform (3) erzeugt wird, so dass mittels der Relativbewegung die Haftkraft der äußeren Grenzschicht des Süßwarenartikels (2) zumindest partiell an der Kontaktfläche der Kavität (4) verringert wird.

2. Verfahren nach Anspruch 1, **dadurch gekenn- zeichnet,** dass die Ablösungsbewegung in der Ebene der Gießform (3) ausgeführt wird.

3. Verfahren nach Anspruch 1 oder 2, **dadurch ge**- **kennzeichnet**, dass die Ablösungsbewegung ausschließlich oder zusätzlich mit einer Bewegungskomponente in einer Richtung orthogonal zur Ebene der Gießform (3) ausgeführt wird.

4. Verfahren nach Anspruch 3, **dadurch gekenn- zeichnet**, dass die Ablösungsbewegung, dann wenn sie von der Gießform (3) ausgeführt wird, die Gießform dafür in eine Vibration versetzt wird, und dass dann, wenn sie vom Saugelement (6) ausgeführt wird, diese Ablösungsbewegung mittels einer Bewegungseinheit dem Saugelement eine Vibration aufprägt, die das Saugelement in eine Vibration versetzt und die Vibration in den Boden des auf dem Kopf stehenden Süßwarenartikels übertragen wird.

5. Vorrichtung (1) zur Entformung wenigstens eines Süßwarenartikels (2) aus einer Kavität (4) einer Gießform (3), vorzugsweise umfassend wenigstens eine Gießform (3), sowie umfassend eine Greifanordnung (5) mit wenigstens einem Saugelement (6), **dadurch gekennzeichnet , dass** ein Mittel (11) zur Ausführung einer oszillierenden oder umlaufenden Ablösungsbewegung für den Süßwarenartikel (2) vorgesehen ist, dessen äußere Grenzschicht klebend in der Kavität (4) der Gießform (3) anhaftet, dass das Mittel hergerichtet ist, so dass die Ablösungsbewegung durch die Gießform (3) und/oder das Saugelement ausführbar ist, wobei das Saugelement (6) mit einem nach oben stehenden Boden (32) des Süßwarenartikels (2) in Kontakt bringbar ist und für die Ablösungsbewegung mittels dieses Saugelements (6) der Boden (32) ansaugbar ist und festgehalten wird, und eine Relativbewegung zwischen dem Saugelement (6) und der Gießform (3) erzeugbar ist, so dass mittels der Relativbewegung die Haftkraft der äußeren Grenzschicht des Süßwarenartikels (2) zumindest partiell an der Kontaktfläche der Kavität (4) verringert wird, und dass über das Mittel (11) für die Ablösungsbewegung wechselnde Kräfte in den Süßwarenartikel (2) einleitbar sind, womit an dessen Grenzschicht Verformungen erzeugbar sind, so dass die Haftkraft des Süßwarenartikels (2) in der Kavität (4) in einem solchen Maße lösbar ist, dass die ankoppelnden Saugkräfte des Saugelements (6) genügen, um den Süßwarenartikel (2) mittels des Saugelements (6) aus der Kavität (4) herauszunehmen.

6. Vorrichtung nach Anspruch 5, **dadurch** g**ekenn**- **zeichnet**, dass die Gießform (3) eine harte formstabile Gießform (3) aus einem Metall oder aus einem festen Kunststoff ist.

7. Vorrichtung nach einem der Ansprüche 5 oder 6,
**dadurch gekennzeichnet, dass** eine Bewegungseinheit (7) für die Greifanordnung (5) vorgesehen ist, und dass die Greifanordnung (5) mittels der Bewegungseinheit (7) zumindest in zwei Bewegungsrichtungen verfahrbar ist und zwar vorzugsweise translatorisch in einer Seitwärtsrichtung hin und her sowie in einer Vertikalrichtung auf- und abwärts.

8. Vorrichtung einem der Ansprüche 5 bis 7, **dadurch gekennzeichnet, dass** die Greifanordnung (5) eine Luftkammer (29) aufweist, dass wenigstens zwei an die Luftkammer (29) angeschlossene Saugelemente (6, 21) vorgesehen sind, und dass jedes Saugelement (6, 21) mit einem Strömungswiderstand versehen ist.

## Claims

1. Method for unmoulding at least one confectionery article (2) from a mould (3), wherein the confectionery article (2) is unmoulded upside down from a cavity (4) of the mould (3) by means of a gripping assembly (5), wherein the gripping assembly (5) comprises at least one suction element (6), the method comprising
- sucking the upwardly facing, substantially flat bottom (32) of the confectionery article (2) by means of the suction element (6),
- before or after the suction element (6) has sucked the bottom (32) of the confectionery article (2), generating an additional oscillating or rotating detachment movement which is performed by the mould (3) and/or the suction element (6) and introduces alternating forces into the confectionery article (2),
- generating deformations in the confectionery article (2) by means of the detachment movement, wherein the deformations affect the confectionery article (2) to its outer boundary layer and reduce its adhesive force at the contact surface of the cavity (4) and at least partially release the adhesive force,
- completely removing the confectionery article (2) from the suction element (6) out of the cavity (4) and
- transferring the upside-down confectionery article (2) by switching off the vacuum,
- wherein for the detachment movement, on the one hand, the suction element (6) contacts, sucks and holds the bottom (32) of the confectionery article (2) and, on the other hand, a relative movement between the suction element (6) and the mould (3) is generated, so that the adhesive force of the outer boundary layer of the confectionery article (2) is at least partially reduced at the contact surface of the cavity (4) by means of the relative movement.

2. Method according to claim 1, **characterized in that** the detachment movement is carried out in the plane of the mould (3).

3. Method according to claim 1 or 2, **characterized in that** the detachment movement is carried out exclusively or additionally with a movement component in a direction orthogonal to the plane of the mould (3).

4. Method according to claim 3, **characterized in that** when the detachment movement is carried out by the mould (3), the mould is put into vibration for this purpose, and that, when it is carried out by the suction element (6), this detachment movement imposes vibration on the suction element by means of a movement unit, which vibration puts the suction element into vibration and the vibration is transmitted into the bottom of the upside-down confectionery article.

5. Device (1) for unmoulding at least one confectionery article (2) from a cavity (4) of a mould (3), preferably comprising at least one mould (3), as well as comprising a gripping assembly (5) with at least one suction element (6), **characterized in that** a means (11) is provided for performing an oscillating or rotating detachment movement for the confectionery article (2), the outer boundary layer of which adhesively sticks to the cavity (4) of the mould (3), **in that** the means is prepared in such a way that the detachment movement can be performed by the mould (3) and/or the suction element, wherein the suction element (6) can be brought into contact with a bottom (32) of the confectionery article (2) which points upwards, and the bottom (32) can be sucked and held in place for the detachment movement by means of this suction element (6), and a relative movement between the suction element (6) and the mould (3) can be produced, so that by means of the relative movement the adhesive force of the outer boundary layer of the confectionery article (2) is at least partially reduced at the contact surface of the cavity (4), and that alternating forces can be introduced into the confectionery article (2) via the means (11) for the detachment movement, whereby deformations can be produced at its boundary layer, so that the adhesive force of the confectionery article (2) in the cavity (4) can be released to such an extent that the coupling suction forces of the suction element (6) are sufficient to remove the confectionery article (2) from the cavity (4) by means of the suction element (6).

6. Device according to claim 5, **characterized in that** the mould (3) is a hard, dimensionally stable mould (3) made of metal or solid plastic.

7. Device according to any one of claim 5 or 6,
**characterized in that** a movement unit (7) is provided for the gripping assembly (5) and **in that** the gripping assembly (5) can be moved by means of the movement unit (7) in at least two directions of movement, preferably translationally back and forth in a lateral direction and up and down in a vertical direction.

8. Device according to any one of claims 5 to 7,
**characterized in that** the gripping assembly (5) comprises an air chamber (29), that at least two suction elements (6, 21) connected to the air chamber (29) are provided and that each suction element (6, 21) is provided with a flow resistance.

## Revendications

1. Procédé de démoulage d'au moins un article de confiserie (2) contenu dans un moule de coulée (3), l'article de confiserie (2) étant démoulé tête en bas hors d'une cavité (4) du moule de coulée (3) au moyen d'un agencement de préhension (5), l'agencement de préhension (5) comprenant au moins un élément de succion (6), ce procédé comprenant :
- la succion du fond (32), essentiellement plat (32) et orienté vers le haut, de l'article de confiserie (2) au moyen de l'élément de succion (6),
- avant ou après que l'élément de succion (6) a aspiré le fond (32) de l'article de confiserie (2), la génération d'un mouvement de décollement supplémentaire oscillant ou circulaire qui est exécuté par le moule de coulée (3) et/ou l'élément de succion (6) et induit des forces variables dans l'article de confiserie (2),
- la génération de déformations dans l'article de confiserie (2) au moyen du mouvement de décollement, les déformations s'exerçant jusqu'à la couche limite extérieure de l'article de confiserie (2) et réduisant sa force d'adhésion au niveau de la surface de contact de la cavité (4) et éliminant au moins en partie la force d'adhésion,
- l'extraction complète de l'article de confiserie (2) hors de la cavité (4) par l'élément de succion (6) et
- le transfert de l'article de confiserie (2) tête en bas par coupure de la dépression,
- sachant qu'en vue du mouvement de décollement, d'une part, l'élément de succion (6) entre en contact avec, exerce une succion sur et maintient l'article de confiserie (2) et, d'autre part, un mouvement relatif étant généré entre l'élément de succion (6) et le moule de coulée (3) de sorte qu'au moyen du mouvement relatif, la force d'adhésion de la couche limite extérieure de l'article de confiserie (2) est réduite au moins partiellement au niveau de la surface de contact de la cavité (4).

2. Procédé selon la revendication 1, **caractérisé en ce que** le mouvement de décollement est exécuté dans le plan du moule de coulée (3).

3. Procédé selon la revendication 1 ou 2, **caractérisé en ce que** le mouvement de décollement est exécuté exclusivement ou supplémentairement avec une composante de mouvement dans un sens orthogonal au plan du moule de coulée (3).

4. Procédé selon la revendication 3, **caractérisé en ce que** le mouvement de décollement, s'il est exécuté par le moule de coulée (3), imprime alors au moule de coulée une vibration et que, s'il est exécuté par l'élément de succion (6), ce mouvement de décollement imprime, au moyen d'une unité de mouvement, une vibration à l'élément de succion et que la vibration est transmise au fond de l'article de confiserie tête en bas.

5. Dispositif (1) de démoulage d'au moins un article de confiserie (2) hors d'une cavité (4) d'un moule de coulée (3), comprenant de préférence au moins un moule de coulée (3), et comprenant un agencement de préhension (5) avec au moins un élément de succion (6), **caractérisé en ce qu'**un moyen (11) d'exécution d'un mouvement de décollement oscillant ou circulaire est prévu pour l'article de confiserie (2), dont la couche limite extérieure adhère par collage dans la cavité (4) du moule de coulée (3), que le moyen est aménagé de sorte que le mouvement de décollement puisse être exécuté par le moule de coulée (3) et/ou l'élément de succion, l'élément de succion (6) pouvant être mis en contact avec un fond (32), orienté vers le haut, de l'article de confiserie (2), et que pour le mouvement de décollement au moyen de cet élément de succion (6), le fond (32) peut être mis en succion et est maintenu, et qu'un mouvement relatif peut être généré entre l'élément de succion (6) et le moule de coulée (3), de sorte qu'au moyen du mouvement relatif, la force d'adhésion de la couche limite extérieure de l'article de confiserie (2) est réduite au moins partiellement au niveau de la surface de contact de la cavité (4) et que par l'intermédiaire du moyen (11) pour le mouvement de décollement, des forces variables peuvent être induites dans l'article de confiserie (2), ce qui peut générer des déformations au niveau de sa couche limite, de sorte que la force d'adhésion de l'article de confiserie (2) dans la cavité (4) peut être éliminée dans une mesure telle que les forces de succion d'amarrage de l'élément de succion (6) suffisent à extraire l'article de confiserie (2) de la cavité (4) au moyen de l'élément de succion (6).

6. Dispositif selon la revendication 5, **caractérisé en ce que** le moule de coulée (3) est un moule de coulée (3) dur indéformable en un métal ou en une matière plastique rigide.

7. Dispositif selon la revendication 5 ou 6, **caracté**- r**isé en ce qu'**une unité de mouvement (7) est prévue pour l'agencement de préhension (5) et que l'agencement de préhension (5) peut être déplacé au moyen de l'unité de mouvement (7) au moins dans deux sens de déplacement, à savoir de préférence en translation dans un sens de va-et-vient latéral ainsi que dans un sens vertical de haut en bas.

8. Dispositif selon l'une des revendications 5 à 7, **ca-ractérisé en ce que** l'agencement de préhension (5) présente une chambre à air (29), que sont prévus au moins deux éléments de succion (6, 21) raccordés à la chambre à air (29) et que chaque élément de succion (6, 21) est muni d'une résistance à l'écoulement.
